# EUROPÄISCHE PATENTSCHRIFT

(11) **EP 3 163 075 B1**
(45) Veröffentlichungstag und Bekanntmachung des Hinweises auf die Patenterteilung: **27.11.2019**
(21) Anmeldenummer: 16192842.9
(22) Anmeldetag: 07.10.2016
(51) Int. Cl.: F03D 13/20, E02D 27/42, E04H 12/34, F03D 13/10

(54) **WINDENERGIEANLAGE, LASTENVERTEILUNGSSYSTEM EINER WINDENERGIEANLAGE UND VERFAHREN ZUM ERRICHTEN EINES TURMS EINER WINDENERGIEANLAGE**
WIND POWER PLANT, LOAD DISTRIBUTION SYSTEM OF A WIND POWER PLANT AND METHOD FOR BUILDING A TOWER OF A WIND POWER PLANT
ÉOLIENNE, SYSTÈME DE RÉPARTITION DE CHARGES D'UNE ÉOLIENNE ET PROCÉDÉ D'ÉRECTION DE TOUR D'UNE ÉOLIENNE

(30) Priorität: 30.10.2015 DE 102015014070
(43) Veröffentlichungstag der Anmeldung: 03.05.2017
(73) Patentinhaber: Senvion GmbH, 22297 Hamburg (DE)
(72) Erfinder: FROST, Bernd, 25551 Winseldorf (DE)
(74) Vertreter: Wallinger Ricker Schlotter Tostmann

(56) Entgegenhaltungen:
- EP-A1- 2 871 289
- DE-A1-102013 109 765
- DE-B4-102004 017 008
- US-A1- 2012 137 620
- Subcommittee ET AL: "Test Methods for Evaluating Existing Foundations 29 November 2010 Issued for Website Publication Foundation Performance Association -Structural Committee TEST METHODS FOR EVALUATING EXISTING FOUNDATIONS by The Structural Committee of The Foundation Performance Association Houston, Texas www.foundati", , 29. November 2010 (2010-11-29), XP055360203, Gefunden im Internet: URL:http://www.foundationperformance.org/p rojects/fpa-sc-02-0.pdf [gefunden am 2017-03-29]

## Beschreibung

Die Erfindung betrifft eine Windenergieanlage mit einem Turm und einem Fundament, wobei der Turm einen unteren Verbindungsflansch mit einer Anzahl von Öffnungen aufweist, und wobei das Fundament eine Anzahl von Verbindungselementen aufweist, die aus einer Oberseite des Fundaments herausragen und im montierten Zustand des Turms zumindest einige der Öffnungen des Verbindungsflansches durchsetzen. Die Erfindung betrifft ferner ein Lastverteilungssystem einer solchen Windenergieanlage. Schließlich betrifft die Erfindung ein Verfahren zum Errichten eines Turms einer Windenergieanlage auf einem Fundament.

Beim Errichten des Turms einer Windenergieanlage, der aus mehreren Turmsegmenten besteht, wird das unterste Turmsegment auf ein zuvor hergestelltes Fundament aufgestellt. Aus dem Fundament herausragende Verbindungselemente durchsetzen in einem unteren Verbindungsflansch des Turmsegments vorhandene Öffnungen. Das untere Turmsegment wird ausgerichtet und in dieser Position temporär fixiert. Vielfach entsteht bei diesem Vorgang zwischen dem unteren Verbindungsflansch und der Oberseite des Fundaments eine Fuge. Diese wird mit einer Vergussmasse verfüllt. Hierzu wird beispielsweise ein entsprechend dünnflüssiger Fließmörtel verwendet. Dieser muss abbinden, bevor das untere Turmsegment belastet und der restliche Turm weiter aufgebaut werden kann. Das Abbinden der Vergussmasse dauert bis zu 24 Stunden.

Zum Handhaben der großen und schweren Turmsegmente ist ein entsprechend großer und leistungsfähiger Kran notwendig, der auch als Hauptkran bezeichnet werden soll. Da dieser Kran für den Zeitraum, während dessen die Vergussmasse abbindet, nicht benötigt wird und ein Verlegen des Krans vielfach unwirtschaftlich ist, steht er beim Aufbau des Turms für etwa einen Tag ungenutzt still.

Um eine Unterbrechung der Bauarbeiten zu vermeiden, ist aus EP 1 735 533 B1 ein Verfahren zum Errichten des Turms einer Windenergieanlage bekannt, bei dem ein Nivellierring auf der Oberseite des Fundaments platziert wird. Dieser wird auf der Oberseite des Fundamentes ausgerichtet und fixiert. Die infolge der Nivellierung entstehende Fuge wird mit einer Vergussmasse verfüllt. Nach dem Abbinden der Vergussmasse erfolgt die eigentliche Montage des Turms, beginnend mit dem untersten Turmsegment, welches auf den Nivellierring aufgesetzt wird. Der kreisrunde Nivellierring erstreckt sich vollständig entlang des Umfangs des unteren Turmflansches und ist aus einem Teil gefertigt.

Nach der DE 10 2013 109 765 A1 wird eine Turmfußringanordnung bereitgestellt, um einen Windkraftanlagenturm an einem Fundament zu befestigen. Dabei ist ein Oberring zur Befestigung an einem Windkraftanlagenturm ausgestaltet. Ein Unterring weist ein offenes Zentrum und mehrere radial ausgerichtete, umlaufend um das offene Zentrum herum verteilte Mulden auf, wobei die Mulden jeweils ein äußeres Ende aufweisen. Der Oberring und der Unterring sind voneinander lösbar, und die Turmfußringanordnung ist mit dem Fundament verbindbar.

Die EP 2 871 289 B1 betrifft eine Nivellieranordnung für einen Turm, die einen Nivellierring, der zum Platzieren zwischen einem Turmfundament und dem Turm ausgelegt ist, und eine Nivelliervorrichtung umfasst, die Folgendes umfasst: ein Verbindungsmittel zum lösbaren Verbinden der Nivelliervorrichtung mit dem Nivellierring bei einem Nivelliervorgang und eine Anzahl von Verstellbeinen, wobei ein Verstellbein zum Bewirken einer Verlagerung des Nivellierrings in Bezug zu dem Turmfundament bei dem Nivelliervorgang ausgelegt ist

Es ist eine Aufgabe der Erfindung, eine Windenergieanlage, ein Lastverteilungssystem einer Windenergieanlage sowie ein Verfahren zum Errichten eines Turms einer Windenergieanlage anzugeben, wobei die Montage des Turms der Windenergieanlage wirtschaftlicher durchführbar sein soll.

Die Aufgabe wird gelöst durch eine Windenergieanlage mit einem Turm und einem Fundament, wobei der Turm einen unteren Verbindungsflansch mit einer Anzahl von Öffnungen aufweist, und wobei das Fundament eine Anzahl von Verbindungselementen aufweist, die aus einer Oberseite des Fundaments herausragen und im montierten Zustand des Turms zumindest einige der Öffnungen des Verbindungsflansches durchsetzen, wobei die Windenergieanlage fortgebildet ist durch ein Lastverteilungssystem mit einem ersten Lastverteilungsring und mit einem zweiten Lastverteilungsring, wobei die Verbindungselemente die Lastverteilungsringe im montierten Zustand des Turms durchsetzen, der erste Lastverteilungsring zumindest mittelbar auf der Oberseite des Fundaments aufgesetzt ist, der zweite Lastverteilungsring unmittelbar benachbart zu dem Verbindungsflansch des Turms und die beiden Lastverteilungsringe unmittelbar benachbart zueinander angeordnet sind.

Vorteilhaft wird zum Aufsetzen des ersten Lastverteilungsrings lediglich ein kleiner kostengünstiger Montagekran benötigt. Der größere und leistungsfähigere Hauptkran, welcher anschließend zum Aufstellen des Turms der Windenergieanlage benötigt wird, ist zum Aufsetzen des ersten Lastverteilungsrings nicht erforderlich. Gleiches gilt für die Montage des separaten zweiten Lastverteilungsrings, der wahlweise am Verbindungsflansch des Turms insbesondere temporär fixiert oder auf den ersten Lastverteilungsring aufgesetzt wird. Die Kosten für den Hauptkran sind also gering, da dieser für einen kürzeren Zeitraum benötigt wird. Ferner ist es möglich, da das Lastverteilungssystem einen ersten und einen zweiten Lastverteilungsring aufweist, also aus zwei separaten Einheiten aufgebaut ist, die Lastverteilungsringe in einer vergleichsweise geringen Materialstärke herzustellen. Im Vergleich zu einem System, bei dem lediglich ein einziger Lastverteilungsring zum Einsatz kommt, haben der erste und zweite Lastverteilungsring ein entsprechend geringes Gewicht. Trotzdem verfügt das System insgesamt über die geforderte Tragfähigkeit.

Gemäß weiteren Ausführungsformen ist ferner vorgesehen, dass neben dem ersten und zweiten Lastverteilungsring weitere Lastverteilungsringe vorgesehen werden. Beispielsweise kann ein dritter Lastverteilungsring zwischen dem ersten und zweiten Lastverteilungsring vorgesehen werden. Das Gewicht und die Materialstärke der Lastverteilungsringe sind bei einer solchen Ausführungsform weiter reduziert.

Außerdem sind Bleche mit geringer Materialstärke besser verfügbar als solche mit hoher Materialstärke. Eine Konstruktion des Lastverteilungssystems mit einem ersten und zweiten Lastverteilungsring ist im Ergebnis ökonomischer herzustellen als ein System, in dem lediglich ein einziger Lastverteilungsring eingesetzt wird. Dieser Vorteil geht über die Herstellungskosten des Lastverteilungssystems hinaus. Auch Transport, Handhabung und Montage sind vor allem wegen des vergleichsweise kleinen hierzu notwendigen Krans besonders ökonomisch.

Der Turm der Windenergieanlage besteht bevorzugt aus einer Mehrzahl von Turmsegmenten. Ein unterstes Turmsegment der Mehrzahl von Turmsegmenten umfasst den unteren Verbindungsflansch. Ferner sind der Turm bzw. die Turmsegmente bevorzugt im Querschnitt zumindest näherungsweise kreisrund. Gleiches trifft auf den Verbindungsflansch zu.

Das Lastverteilungssystem erleichtert zum einen das Aufstellen, d.h. die Montage, des Turms der Windenergieanlage, dient aber außerdem dazu, die konzentrierten Lasten am Turmfuß, vor allem am unteren Verbindungsflansch des Turms, in eine möglichst große Fläche bzw. ein möglichst großes Volumen des Fundaments einzuleiten.

Gemäß einer vorteilhaften Ausführungsform ist die Windenergieanlage dadurch fortgebildet, dass der erste Lastverteilungsring und der zweite Lastverteilungsring jeweils in Umfangsrichtung segmentiert sind, also aus mehreren einzelnen Segmenten aufgebaut sind.

Die einzelnen Segmente sind bevorzugt Segmente eines kreisrunden Rings. Vorteilhaft besteht bei einem segmentierten Lastverteilungsring lediglich die Notwendigkeit, einzelne Segmente der Lastverteilungsringe und nicht den Lastverteilungsring als Ganzes mit einem Kran zu handhaben. Entsprechend kann ein kleinerer Kran mit geringerer Tragfähigkeit eingesetzt werden. Beispielsweise wird der an einem Lastfahrzeug vorhandene Kran zum Montieren der Lastverteilungsringe, d.h. der Segmente, eingesetzt.

Ferner ist insbesondere vorgesehen, dass erste Segmente des ersten Lastverteilungsrings und zweite Segmente des zweiten Lastverteilungsrings in Umfangsrichtung gegeneinander versetzt angeordnet sind, so dass erste Stöße zwischen den ersten Segmenten des ersten Lastverteilungsrings und zweite Stöße zwischen den zweiten Segmenten des zweiten Lastverteilungsrings entlang des Umfangs der Lastverteilungsringe gegeneinander versetzt sind.

An den Übergängen zwischen den einzelnen Segmenten der Lastverteilungsringe können konstruktionsbedingt keine Biegemomente in Umfangsrichtung übertragen werden. Um dennoch eine Lastverteilung in Umfangsrichtung zu ermöglichen, so dass beispielsweise bei einer Imperfektion des unteren Verbindungsflansches die Kräfte gleichmäßig in das Fundament eingeleitet werden, sind die Lastverteilungsringe mit versetzten Stößen angeordnet. Bevorzugt befindet sich der Stoß jeweils in der Mitte des Segments des jeweils anderen Lastverteilungsrings. Mit anderen Worten befinden sich beispielsweise die Stöße zwischen den ersten Segmenten des ersten Lastverteilungsrings jeweils zumindest näherungsweise in der Mitte zwischen den Freienden der zweiten Segmente des zweiten Lastverteilungsrings und umgekehrt. So ist eine Lastübertragung in Umfangsrichtung sichergestellt und die am Turmfuß auftretenden Kräfte werden "verschmiert". Die Lastverteilung im Fundament ist im Vergleich zu einer Situation, in der kein Lastverteilungsring zum Einsatz kommt, homogener.

Der erste und der zweite Lastverteilungsring können jeweils eine Vielzahl von Durchgangsöffnungen aufweisen, die in einem Lochbild angeordnet sind, welches zur Durchsetzung der Durchgangslöcher mittels der auf der Oberseite des Fundaments angeordneten Verbindungselemente ausgestaltet ist. Mit anderen Worten ist also das Lochbild der Durchgangsöffnungen passgenau zur Anordnung der Verbindungselemente auf der Oberseite des Fundaments. Hierzu ist beispielsweise vorgesehen, dass jeweils genau ein Verbindungselement ein Durchgangsloch des ersten und zweiten Lastverteilungsrings durchsetzt. Ebenso ist es möglich, dass das Lochbild an verschiedene Anordnungen von Verbindungselementen auf der Oberseite von Fundamenten unterschiedlichen Typs angepasst ist. So ist es möglich, den ersten und zweiten Lastverteilungsring für eine Mehrzahl unterschiedlicher Fundamenttypen zu verwenden.

Die Windenergieanlage ist ferner insbesondere derart weitergebildet, dass neben einem ersten und einem zweiten Lastverteilungsring weitere Lastverteilungsringe vorgesehen sind. Somit sind also insbesondere drei und mehr übereinander gestapelte Lastverteilungsringe vorgesehen, welche jeweils aus einzelnen Segmenten aufgebaut sind. So wie im Zusammenhang mit dem ersten und zweiten Lastverteilungsring beschrieben, ist auch bei einer größeren Anzahl von Lastverteilungsringen insbesondere eine gegeneinander versetzte Anordnung der einzelnen Segmente der Lastverteilungsringe und beispielsweise eine gestaffelte Breite der Lastverteilungsringe vorgesehen. Bei beispielsweise drei Lastverteilungsringen wäre also eine erste Breite des ersten Lastverteilungsrings größer als diejenige des zweiten Lastverteilungsrings, welche wiederum größer wäre als diejenige eines dritten Lastverteilungsrings, welcher unmittelbar benachbart zum Turmflansch angeordnet wäre. Entsprechend wäre der erste Lastverteilungsring unmittelbar benachbart zur Oberseite des Fundaments angeordnet, der zweite Lastverteilungsring entsprechend zwischen dem ersten und zweiten Lastverteilungsring.

Bevorzugt ist die Windenergieanlage ferner derart ausgestaltet, dass das Fundament einen Fundamentkorb mit Ankerstangen aufweist, wobei Freienden der Ankerstangen als Verbindungselemente aus der Oberseite des Fundaments herausragen.

Mit anderen Worten haben die Lastverteilungsringe ein Lochbild, das der Anordnung der Ankerstangen des Fundamentkorbs auf der Oberfläche des Fundaments entspricht. Ferner weisen der erste und der zweite Lastverteilungsring bevorzugt eine passende Anzahl von Durchgangsöffnungen auf, so dass jeweils ein Verbindungselement des Fundaments eine Durchgangsöffnung durchsetzt. Bei den Durchgangsöffnungen handelt es sich bevorzugt um Bohrungen, insbesondere um kreisrunde Bohrungen.

Gemäß einer weiteren vorteilhaften Ausführungsform ist vorgesehen, dass eine erste Breite des ersten Lastverteilungsrings größer oder gleich einer zweiten Breite des zweiten Lastverteilungsrings ist, wobei die erste und die zweite Breite in einer Radialrichtung des jeweiligen Lastverteilungsrings bestimmbar sind.

In einem Querschnitt, der in Radialrichtung verläuft und außerdem senkrecht zu den belasteten Oberflächen steht, ist eine solche Konstruktion treppenförmig. Der zweite und obere Lastverteilungsring ist in diesem Querschnitt schmaler als der erste und untere Lastverteilungsring. Diese Konstruktion führt zu einer breiten und gleichmäßigen Lastverteilung bzw. Krafteinleitung in das Fundament und ist darüber hinaus materialsparend. Da für den zweiten Lastverteilungsring eine geringere Breite vorgesehen ist, beansprucht dieser weniger Material. Der zweite Lastverteilungsring ist ferner insbesondere zumindest so breit wie der untere Verbindungsflansch des Turms. Dabei wird die Breite des Verbindungsflanschs ebenfalls in dem beschriebenen Querschnitt betrachtet. Ferner ist bevorzugt vorgesehen, dass eine Materialstärke des ersten Rings geringer ist als eine Materialstärke des zweiten Rings.

Gemäß einer vorteilhaften Ausführungsform ist die Windenergieanlage dadurch fortgebildet, dass zwischen dem ersten Lastverteilungsring und der Oberseite des Fundaments eine Ausgleichsmasse zum Ausnivellieren des Turms der Windenergieanlage vorhanden ist. Als Vergussmasse wird bevorzugt ein entsprechend dünnflüssiger Fließmörtel eingesetzt.

Besonders vorteilhaft ist es, dass der vergleichsweise dünne und somit relative leichte erste Lastverteilungsring auch mit geringerem Aufwand auszunivellieren ist. So können beispielsweise kostengünstige Kunststoffmuttern verwendet werden, um den ersten Lastverteilungsring in der ausnivellierten Position zu fixieren. Diese beeinflussen das endgültige statische System kaum. Nachdem der erste Lastverteilungsring ausgerichtet und ausnivelliert ist, erfolgt anschließend die Montage des Turms der Windenergieanlage mit dem Hauptkran in einer einzigen und ununterbrochenen Arbeitsphase, so dass der Hauptkran sehr effizient genutzt wird.

Die Aufgabe wird ferner gelöst durch ein Lastverteilungssystem einer Windenergieanlage, die einen Turm und ein Fundament aufweist, wobei der Turm einen unteren Verbindungsflansch mit einer Anzahl von Öffnungen aufweist, und wobei das Fundament eine Anzahl von Verbindungselementen aufweist, die aus einer Oberseite des Fundaments herausragen und im montierten Zustand des Turms zumindest einige der Öffnungen des Verbindungsflansches durchsetzen, wobei das Lastverteilungssystem dadurch fortgebildet ist, dass das Lastverteilungssystem einen ersten Lastverteilungsring und einen zweiten Lastverteilungsring aufweist, wobei die Lastverteilungsringe dazu eingerichtet sind, im montierten Zustand des Turms von den Verbindungselementen durchsetzbar zu sein, und wobei die Lastverteilungsringe ferner dazu eingerichtet sind, dass der erste Lastverteilungsring zumindest mittelbar auf der Oberseite des Fundaments aufsetzbar ist, der zweite Lastverteilungsring unmittelbar benachbart zu dem Verbindungsflansch anordnenbar ist und die beiden Lastverteilungsringe unmittelbar benachbart zueinander anordnenbar sind.

Gemäß einer vorteilhaften Ausführungsform ist das Lastverteilungssystem dadurch fortgebildet, dass der erste Lastverteilungsring und der zweite Lastverteilungsring jeweils in Umfangsrichtung segmentiert sind, also aus mehreren Segmenten aufgebaut sind.

Ferner ist bevorzugt vorgesehen, dass erste Segmente des ersten Lastverteilungsrings und zweite Segmente des zweiten Lastverteilungsrings des Lastverteilungssystems in Umfangsrichtung gegeneinander versetzt angeordnet sind, wenn das Lastverteilungssystem in einer Windenergieanlage zum Einsatzkommt. Das Lastverteilungssystem ist also derart eingerichtet, dass vorgesehen ist, dass erste Stöße zwischen den ersten Segmenten des ersten Lastverteilungsrings und zweite Stöße zwischen den zweiten Segmenten des zweiten Lastverteilungsrings entlang des Umfangs der Lastverteilungsringe gegeneinander versetzt sind.

Bevorzugt ist außerdem vorgesehen, dass der erste Lastverteilungsring und der zweite Lastverteilungsring jeweils eine Vielzahl von Durchgangsöffnungen aufweisen, die in einem Lochbild angeordnet sind, welches zumindest näherungsweise passgenau zu einer Anordnung der Verbindungselemente auf der Oberseite des Fundaments ausgestaltet ist. Bei den Durchgangsöffnungen handelt es sich beispielsweise um kreisrunde Bohrungen.

Gemäß einer weiteren Ausführungsform ist das Lastverteilungssystem dadurch fortgebildet, dass eine erste Breite des ersten Lastverteilungsrings größer oder gleich einer zweiten Breite des zweiten Lastverteilungsrings ist, wobei die erste und die zweite Breite in einer Radialrichtung des jeweiligen Lastverteilungsrings bestimmbar sind.

Ferner ist insbesondere vorgesehen, dass eine Materialstärke des ersten Lastverteilungsrings geringer ist als eine Materialstärke des zweiten Lastverteilungsrings.

Das Lastverteilungssystem wird bevorzugt zum Aufbau des Turms einer Windenergieanlage verwendet.

Auf das Lastverteilungssystem sowie seine Verwendung treffen gleiche oder ähnliche Vorteile sowie Aspekte bezüglich seiner Weiterbildung zu, wie sie zuvor bereits im Hinblick auf die Windenergieanlage erwähnt wurden.

Die Aufgabe wird ferner gelöst durch ein Verfahren zum Errichten eines Turms einer Windenergieanlage auf einem Fundament, wobei der Turm einen unteren Verbindungsflansch mit einer Anzahl von Öffnungen aufweist, und wobei das Fundament eine Anzahl von Verbindungselementen aufweist, die aus einer Oberseite des Fundaments herausragen, wobei zum Montieren des Turms die Verbindungselemente durch zumindest einige der Öffnungen des Verbindungsflansches hindurchgeführt werden, wobei das Verfahren durch die folgenden Schritte fortgebildet ist:
- Bereitstellen eines Lastverteilungssystems, welches einen ersten Lastverteilungsring und einen zweiten Lastverteilungsring aufweist,
- Anordnen des ersten Lastverteilungsrings auf dem Fundament, wobei die Verbindungselemente den ersten Lastverteilungsring durchsetzen,
- Ausnivellieren des ersten Lastverteilungsrings auf der Oberseite des Fundaments,
- Anordnen des zweiten Lastverteilungsrings unmittelbar benachbart zu dem Verbindungsflansch des Turms und
- Anordnen der beiden Lastverteilungsringe unmittelbar benachbart zueinander.

Auch auf das Verfahren zum Errichten eines Turms einer Windenergieanlage treffen gleiche oder ähnliche Vorteile zu, wie sie bereits im Hinblick auf die Windenergieanlage erwähnt wurden, so dass auf eine erneute Vorstellung verzichtet wird.

Der erste Lastverteilungsring wird bevorzugt zumindest mittelbar auf die Oberseite des Fundaments aufgesetzt. Die Anordnung des zweiten Lastverteilungsrings sowie der beiden Lastverteilungsringe unmittelbar benachbart zueinander erfolgt beispielsweise in der oben genannten Reihenfolge. Ebenso ist eine gleichzeitige Anordnung der Lastverteilungsringe vorgesehen.

Gemäß einer vorteilhaften Ausführungsform ist das Verfahren dadurch fortgebildet, dass während des Ausnivellierens der erste Lastverteilungsring auf der Oberseite des Fundaments ausgerichtet wird und dabei zumindest abschnittsweise ein Spalt zwischen einer Unterseite des ersten Lastverteilungsrings und der Oberseite des Fundaments entsteht und anschließend der entstandene Spalt zum zumindest überwiegenden Teil mit einer Ausgleichsmasse gefüllt wird. Als Ausgleichsmasse wird insbesondere eine Vergussmasse, beispielsweise Fließmörtel, verwendet.

Ferner ist zur Qualitätsprüfung der Vergussmasse bevorzugt vorgesehen, dass nach dem Füllen des entstandenen Spalts mit Ausgleichsmasse und dem Aushärten der Ausgleichsmasse, eine akustisch gestützte Qualitätsprüfung der Verbindung zwischen dem ersten Lastverteilungsring und der Ausgleichsmasse vorgenommen wird.

Beispielsweise wird der erste Lastverteilungsring nach dem Aushärten der Ausgleichsmasse abgeklopft. So können Hohlräume in der Ausgleichmasse festgestellt werden. Da der erste Lastverteilungsring relativ leicht ist, ist es lediglich mit einem geringen Aufwand verbunden, diesen von der ausgehärteten Vergussmasse abzunehmen und die Ausgleichmasse an entsprechender Stelle Nachzuarbeiten. In diesem Zusammenhang ist es besonders vorteilhaft, wenn der erste Lastverteilungsring segmentiert ausgeführt ist. So ist es im Idealfall lediglich notwendig, ein einzelnes Segment abzuheben, um die darunterliegende Vergussmasse nachzuarbeiten.

Gemäß einer alternativen Weiterbildung ist vorgesehen, dass während des Ausnivellierens ein ausgerichteter Fundamentabschnitt aus einer Ausgleichsmasse bereitgestellt wird und der erste Lastverteilungsring auf diesen ausgerichteten Fundamentabschnitt aufgesetzt wird.

Auf der Oberseite des Fundaments wird beispielsweise eine Schalung errichtet. Diese Schalung wird anschließend mit einer Ausgleichsmasse gefüllt, die so fließfähig ist, dass sie sich unter dem Einfluss der Schwerkraft waagerecht ausnivelliert und eine glatte und waagerecht ausgerichtete Oberfläche ausbildet. Die erhärtete Ausgleichsmasse bildet den Fundamentabschnitt.

Ferner umfasst das Verfahren zum Errichten eines Turms einer Windenergieanlage insbesondere das Befestigen des Turms der Windenergieanlage an dem Verbindungsflansch durch Verbindung mit den Verbindungselementen. Beispielsweise werden die mit Außengewinde versehenen Verbindungselemente mit dem Verbindungsflansch verbunden, indem auf diese Muttern aufgesetzt und angezogen werden. Ferner umfasst das Verfahren insbesondere den Schritt des Aushärtens der Ausgleichsmasse. Dieser Schritt erfolgt bevorzugt bevor der Turmflansch befestigt wird und nachdem die Ausgleichmasse in den Spalt eingebracht wurde.

Gemäß einer weiteren Ausführungsform ist das Verfahren dadurch fortgebildet, dass der erste Lastverteilungsring und der zweite Lastverteilungsring jeweils in Umfangsrichtung segmentiert sind, also aus mehreren einzelnen Segmenten aufgebaut sind und der erste Lastverteilungsring segmentweise auf dem Fundament angeordnet wird.

Für das segmentweise Aufsetzen des Lastverteilungsrings kann vorteilhaft ein kleiner und kostengünstiger Kran eingesetzt werden, dessen Kosten im Vergleich zum Hauptkran, der zum Aufstellen des Turms der Windenergieanlage vonnöten ist, sehr gering ausfallen. Das Verfahren zum Errichten des Turms der Windenergieanlage ist aus diesem Grund besonders wirtschaftlich.

Ferner ist insbesondere vorgesehen, dass die Segmente des ersten Lastverteilungsrings und die Segmente des zweiten Lastverteilungsrings in Umfangsrichtung gegeneinander versetzt angeordnet werden, so dass erste Stöße zwischen den Segmenten des ersten Lastverteilungsrings und zweite Stöße zwischen den Segmenten des zweiten Lastverteilungsrings entlang des Umfangs der Lastverteilungsringe gegeneinander versetzt angeordnet werden.

Durch die versetzte Anordnung der Segmente der Lastverteilungsringe erfolgt eine Lastverteilung in Umfangsrichtung. Bevorzugt werden die Segmente so ausgerichtet, dass die Stöße der Segmente eines Rings zumindest näherungsweise in der Mitte zwischen den Freienden der Segmente des jeweils anderen Rings angeordnet sind.

Ferner ist insbesondere vorgesehen, dass der erste Lastverteilungsring Durchgangsöffnungen aufweist, die in einem Lochbild angeordnet sind, wobei das Fundament einen Fundamentkorb mit Ankerstangen aufweist und Freienden der Ankerstangen als Verbindungselemente vorgesehen sind, und wobei zum Herstellen des Fundaments mit einer vorgegebenen Anordnung der Verbindungselemente auf der Oberseite des Fundaments, der erste Lastverteilungsring auf die Ankerstangen aufgesetzt wird, und anschließend der Fundamentkorb und insbesondere die Ankerstangen im Fundament fixiert werden, wobei das erste Verbindungselement als Schablone für den Ankerkorb wirkt.

Vorteilhaft erfüllt der erste Lastverteilungsring eine Doppelfunktion. Er erfüllt zum einen seine Aufgabe innerhalb des Lastverteilungssystems und gleichzeitig wirkt es als Schablone für den Ankerkorb. Diese zweite Funktion kann er erfüllen, da der erste Lastverteilungsring aus vergleichsweise dünnem Material hergestellt werden kann und entsprechend leicht ist. So wird der Aufbau, bevor das Fundament endgültig hergestellt ist, nicht unnötig "kopflastig". Dies hätte möglicherweise eine Instabilität des noch nicht vergossenen Ankerkorbs zur Folge und würde weitere Maßnahmen zur Sicherung des Ankerkorbs erfordern. Auf diese kann vorteilhaft verzichtet werden, was das Verfahren nochmals effizienter macht.

Die Lastverteilungsringe haben beispielsweise Materialstärken zwischen 20 mm und 60 mm. Die erste bzw. zweite Breite der Lastverteilungsringe liegen beispielsweise im Bereich zwischen 400 mm und 600 mm. Die Lastverteilungsringe sind bevorzugt kreisrund. Der mittlere Anordnungsdurchmesser der Lastverteilungsringe entspricht ferner bevorzugt zumindest näherungsweise dem mittleren Durchmesser des Verbindungsflansches am unteren Turmsegment, also am Turmfuß. Dies sind beispielsweise 6 m.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.

Es zeigen:
- Fig. 1: eine vereinfacht und schematisch dargestellte Windenergieanlage,
- Fig. 2: eine schematisch und vereinfachte Querschnittsansicht durch den Turmfuß und das Fundament der Windenergieanlage,
- Fig. 3: eine schematisch vereinfachte Detailansicht des in Fig. 2 gezeigten Querschnitts im Bereich des Turmfußes und
- Fig. 4a), b): schematisch vereinfachte Draufsichten auf den ersten Lastverteilungsring (Fig. 4b) und den zweiten Lastverteilungsring (Fig. 4a).

In den Zeichnungen sind jeweils gleiche oder gleichartige Elemente und/oder Teile mit denselben Bezugsziffern versehen, so dass von einer erneuten Vorstellung jeweils abgesehen wird.

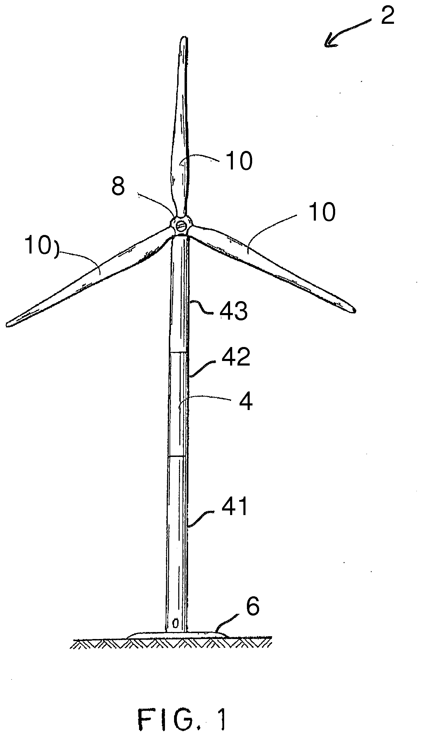

Fig. 1 zeigt in schematisch vereinfachter Ansicht eine Windenergieanlage 2 mit einem Turm 4 und einem Fundament 6, welches den Turm 4 trägt. Der Turm 4 umfasst mehrere Turmsegmente 41, 42, 43, beispielhaft ein unteres Turmsegment 41, ein mittleres Turmsegment 42 und ein oberes Turmsegment 43. Der Turm 4 trägt eine Gondel bzw. ein Maschinenhaus der Windenergieanlage 2, welche(s) in Fig. 1 nicht sichtbar ist. Rotorblätter 10 der Windenergieanlage 2 sind an ihrer Blattwurzel mit einer Rotornabe 8 verbunden und treiben über die Rotornabe 8 eine Hauptantriebswelle der Windenergieanlage 2 an.

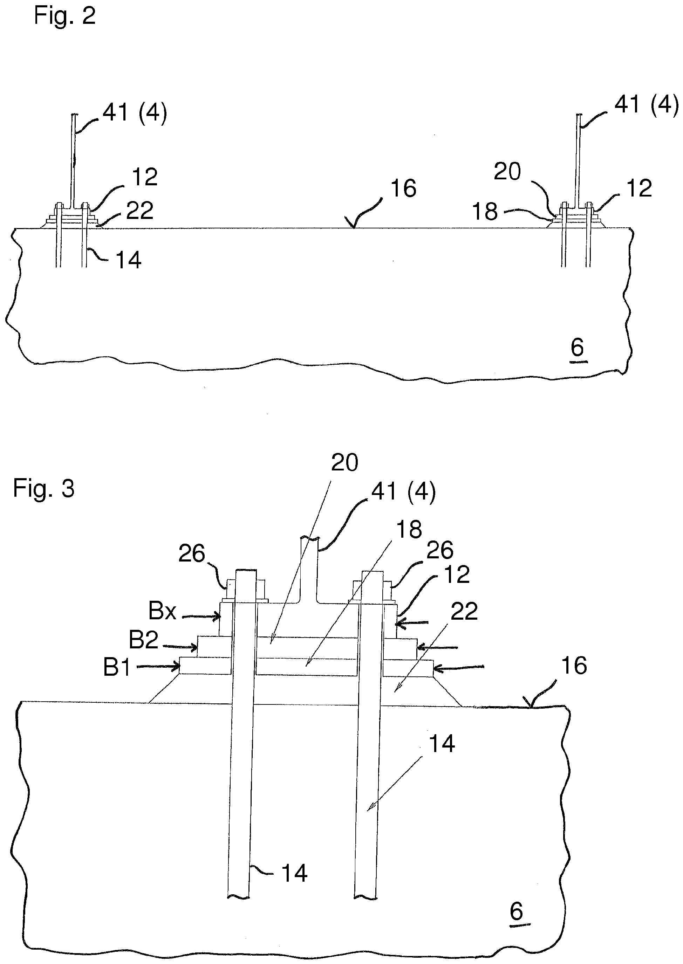

Fig. 2 zeigt in schematisch vereinfachter Querschnittsansicht einen Teil des unteren Turmsegments 41 des Turms 4 sowie einen Teil des Fundaments 6. Der Turm 4, beispielhaft das untere Turmsegment 41, umfasst einen unteren Verbindungsflansch 12, der eine Anzahl von Öffnungen aufweist. Das Fundament 6 umfasst eine insbesondere gleich große Anzahl von Verbindungselementen 14, welche in Fig. 2 lediglich abschnittsweise dargestellt sind. Aus Gründen der Übersichtlichkeit ist lediglich ein Verbindungselement 14 mit Bezugszeichen versehen. Das Fundament 6 umfasst einen nicht dargestellten Fundamentkorb mit Ankerstangen, wobei Freienden der Ankerstangen als Verbindungselemente 14 aus der Oberseite 16 des Fundaments 6 herausragen. Die Verbindungselemente 14 durchsetzen im montierten Zustand des Turms 4 die Öffnungen des Verbindungsflansches 12. Der Turm 4 bzw. seine Turmsegmente 41, 42, 43 sowie der Verbindungsflansch 12 sind im Querschnitt insbesondere kreisrund.

Fig. 3 zeigt den Verbindungsbereich zwischen dem Fundament 6 und dem Turm 4 im Bereich des unteren Verbindungsflansches 12 in einer gegenüber Fig. 2 vergrößerten und schematischen Detailansicht.

Die Windenergieanlage 2 weist ein Lastverteilungssystem auf, welches seinerseits einen ersten Lastverteilungsring 18 und einen zweiten Lastverteilungsring 20 aufweist.

Die Verbindungselemente 14 durchsetzen die Lastverteilungsringe 18, 20 im montierten Zustand des Turms 4. Dabei ist der erste Lastverteilungsring 18 zumindest mittelbar auf der Oberseite 16 des Fundaments 6 aufgesetzt. Der zweite Lastverteilungsring 20 ist unmittelbar benachbart zu dem Verbindungsflansch 12 des Turms 4 angeordnet. Die beiden Lastverteilungsringe 18, 20 sind ebenfalls unmittelbar benachbart zueinander angeordnet. Zwischen der Oberseite 16 des Fundaments 6 und dem ersten Lastverteilungsring 18, d.h. dessen Unterseite, befindet sich eine Ausgleichsmasse 22 zum Ausnivellieren des Turms 4 der Windenergieanlage 2.

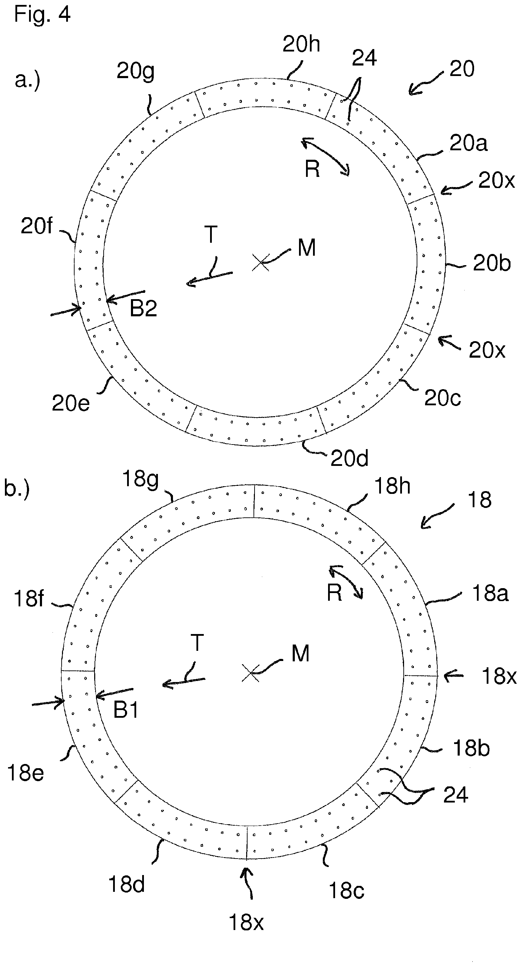

Der erste und der zweite Lastverteilungsring 18, 20 sind jeweils in Umfangrichtung segmentiert. Mit anderen Worten sind also der erste und der zweite Lastverteilungsring 18, 20 jeweils aus mehreren einzelnen Segmenten aufgebaut. Dies zeigen die Fig. 4a) und 4b) in je einer schematisch vereinfachten Draufsicht. Fig. 4b) zeigt den ersten Lastverteilungsring 18 und Fig. 4a) den zweiten Lastverteilungsring 20.

Der erste Lastverteilungsring 18 umfasst eine Mehrzahl von ersten Segmenten 18a ... 18h. Der zweite Lastverteilungsring 20 umfasst eine Mehrzahl von zweiten Segmenten 20a ... 20h. Der erste und der zweite Lastverteilungsring 18, 20 werden in ihrer in den Fig. 4a) und 4b) dargestellten Orientierung übereinander angeordnet. Entsprechend sind die in Umfangsrichtung R segmentierten Lastverteilungsringe 18, 20 gegeneinander versetzt angeordnet.

Zwischen den ersten Segmenten 18a ... 18h befinden sich erste Stöße 18x, an denen die ersten Segmente 18a ... 18h aneinanderstoßen. In Fig. 4b) sind aus Gründen der Übersichtlichkeit lediglich einige Stöße 18x mit Bezugszeichen versehen. Zwischen den zweiten Segmenten 20a ... 20h befinden sich zweite Stöße 20x, an denen die zweiten Segmente 20a ... 20h aneinanderstoßen. In Fig. 4a) sind aus Gründen der Übersichtlichkeit lediglich einige Stöße 20x mit Bezugszeichen versehen.

Die ersten Stöße 18x und die zweiten Stöße 20x sind in Umfangsrichtung R versetzt zu einander angeordnet. Die ersten bzw. zweiten Stöße 18x, 20x liegen jeweils zwischen den Freienden der zweiten bzw. ersten Segmente 20a ... 20h, 18a ... 18h. Bevorzugt sind die Stöße 18x, 20x so angeordnet, dass die Stöße 18x, 20x des einen Lastverteilungsrings 18, 20 jeweils in der Mitte zwischen den Freienden der Segmente 18a ...18h, 20a ... 20h des anderen Lastverteilungsrings 18, 20 zum Liegen kommen. Beispielsweise befindet sich der erste Stoß 18x, der zwischen den mit Bezugszeichen 18a und 18b bezeichneten ersten Segmenten liegt, in der Mitte zwischen den Freienden des mit Bezugszeichen 20b bezeichneten zweiten Segments des zweiten Lastverteilungsrings 20. Durch die versetzte Anordnung der Segmente 18a ... 18h, 20a ... 20h ist sichergestellt, dass trotz der segmentierten Bauweise der Lastverteilungsringe 18, 20 Lasten in Umfangsrichtung R des Lastverteilungssystems übertragen werden.

Die in den Fig. 4 a) und b) gezeigten Durchgangsöffnungen 24 in den Lastverteilungsringen 18, 20, bei denen es sich insbesondere um kreisrunde Bohrungen handelt, sind in einem Lochbild angeordnet, welches zumindest näherungsweise passgenau zu einer Anordnung der Verbindungselemente 14 auf der Oberseite 16 des Fundaments 6 ausgestaltet ist. Insbesondere durchsetzt jeweils ein Verbindungselement 14 eine zugehörige Durchgangsöffnung 24.

Es ist ferner vorgesehen, dass eine erste Breite B1 des ersten Lastverteilungsrings 18 größer oder gleich einer zweiten Breite B2 des zweiten Lastverteilungsrings 20 ist.

Die erste Breite B1 und die zweite Breite B2 werden in einer Radialrichtung T, ausgehend vom Mittelpunkt M des jeweiligen Lastverteilungsrings 18, 20 bestimmt. Wird das Lastverteilungssystem in einem Querschnitt betrachtet, der in Radialrichtung T orientiert ist und außerdem senkrecht zu den in Fig. 4 sichtbaren belasteten Oberflächen der Lastverteilungsringe 18, 20 steht, ergibt sich ein treppenförmiger Aufbau. Einen solchen Querschnitt zeigt beispielhaft Fig. 3. Dabei ist die zweite Breite B2 des zweiten Lastverteilungsrings 20 zumindest so groß wie die Breite Bx des Verbindungsflansches 12. Die Breite Bx des Verbindungsflansches 12 wird ebenfalls in Radialrichtung T gemessen, in diesem Fall genau genommen in einer Radialrichtung des Turms 4 bzw. des unteren Turmsegments 41.

Bei einem Verfahren zum Errichten des Turms 4 der Windenergieanlage 2 auf dem Fundament 6 wird zunächst das Lastverteilungssystem, welches den ersten Lastverteilungsring 18 und den zweiten Lastverteilungsring 20 aufweist, bereitgestellt. Der erste Lastverteilungsring 18, genauer seine ersten Segmente 18a ...18h, werden auf dem Fundament 6 angeordnet, wobei die Verbindungselemente 14 des Fundaments 6 die Durchgangsöffnungen 24 des ersten Lastverteilungsrings 18 durchsetzen. Anschließend wird der erste Lastverteilungsring 18 auf der Oberseite 16 des Fundaments 6 ausgerichtet bzw. ausnivelliert. Beim Ausnivellieren des ersten Lastverteilungsrings 18 entsteht in vielen Fällen zwischen der Oberseite 16 des Fundaments 6 und einer dieser zugewandten Unterseite des ersten Lastverteilungsrings 18 zumindest abschnittsweise ein Spalt. Dieser Spalt wird anschließend zumindest überwiegend mit der Ausgleichsmasse 20 gefüllt. Hierzu wird beispielsweise eine Vergussmasse oder ein Fließmörtel verwendet. Nach dem verfüllen des Spalts härtet die Ausgleichsmasse 20 aus. Dieser Vorgang nimmt mehrere Stunden in Anspruch, vielfach 24 Stunden bis zu mehreren Tagen, je nach Umgebungsbedingungen und Art der Ausgleichsmasse.

Vorteilhaft ist zum Aufsetzen der ersten Segmente 18a ... 18h des ersten Lastverteilungsrings 18 lediglich ein kleiner und kostengünstiger Kran mit geringer Tragkraft notwendig. Der Hauptkran, der zum Montieren der einzelnen Turmsegmente 41, 42, 43 benötigt wird, ist hierzu nicht erforderlich. Beispielsweise werden die ersten Segmente 18a ... 18h des ersten Lastverteilungsrings 18 mit einem mobilen Kran, wie er beispielsweise an einem Lastkraftfahrzeug vorhanden ist, welches die ersten Segmente 18a ... 18h anliefert, auf das Fundament 6 aufgesetzt. Während der Aushärtezeit der Ausgleichsmasse 22 steht somit der zum Aufstellen des Turms 4 der Windenergieanlage 2 notwendige Hauptkran nicht ungenutzt an der Baustelle.

Nach dem Aushärten der Ausgleichsmasse 22 ist ferner insbesondere vorgesehen, dass eine akustisch gestützte Qualitätsprüfung der Verbindung zwischen dem ersten Lastverteilungsring 18 und der Ausgleichsmasse 22 vorgenommen wird. Hierzu wird der erste Lastverteilungsring 18 beispielsweise abgeklopft. Sollte sich dabei herausstellen, dass sich in der Ausgleichsmasse 22 Hohlräume gebildet haben, so ist dies anhand der akustischen Prüfung feststellbar. In einem solchen Fall wird der erste Lastverteilungsring 18 bzw. das betreffende erste Segment 18a ... 18h von der Ausgleichsmasse 22 abgehoben und die Ausgleichsmasse 22 wird nachgearbeitet.

Alternativ ist es möglich, einen Fundamentabschnitt aus Ausgleichsmasse 22 bereitzustellen und den ersten Lastverteilungsring 18 auf diesen ausgerichteten Fundamentabschnitt aufzusetzen. Hierzu wird beispielsweise auf der Oberfläche 16 des Fundaments 6 eine Schalung errichtet, welche mit entsprechend dünnflüssiger und somit fließfähiger Ausgleichsmasse 22 gefüllt wird. Die Ausgleichsmasse 22 richtet sich aufgrund ihrer Fließfähigkeit selbständig waagerecht in der Schalung aus, so dass anschließend der erste Lastverteilungsring 18 auf den ausgerichteten Fundamentabschnitt aufgesetzt wird.

Nachdem der erste Lastverteilungsring 18 ausnivelliert ist, wird der zweite Lastverteilungsring 20 bzw. seine zweiten Segmente 20a ... 20h auf den ersten Lastverteilungsring 18 aufgesetzt. Hierbei werden insbesondere die ersten und zweiten Segmente 18a ... 18h, 20a ... 20h in Umfangsrichtung R versetzt zueinander angeordnet, so wie dies im Zusammenhang mit den Fig. 4a) und 4b) erläutert wurde.

Anschließend wird der Turm 4 der Windenergieanlage 2 montiert, indem beispielsweise das untere Turmsegment 41 mit seinem Verbindungsflansch 12 auf eine Oberseite des zweiten Lastverteilungsrings 20 aufgesetzt wird. Der Turm 4 wird am Fundament 6 fixiert, indem die den Verbindungsflansch 12 durchsetzenden Verbindungselemente 14 mit dem unteren Verbindungsflansch 12 verbunden werden. Hierzu werden beispielsweise geeignete Muttern 26 (vgl. Fig. 3) auf ein Außengewinde der Verbindungselemente 14 aufgesetzt und mit dem vorgesehenen Drehmoment angezogen.

Zum Herstellen des Fundaments 6 ist ferner insbesondere vorgesehen, dass der erste Lastverteilungsring 18 als Schablone für die Ankerstangen des Fundamentkorbs eingesetzt wird. Hierzu werden die Ankerstangen, welche später als Verbindungselemente 14 fungieren, durch die Durchgangsöffnungen 24 des ersten Lastverteilungsrings 18 geführt, bevor der Ankerkorb vollständig vergossen wird. So ist sichergestellt, dass das Lochbild der Durchgangsöffnungen 24 der Lastverteilungsringe 18, 20 perfekt zu der Anordnung der Verbindungselemente 14 auf der Oberseite 16 des Fundaments 6 passt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen. Der Schutzumfang wird durch die Patentansprüche definiert. Die Beschreibung und die Zeichnungen sind jedoch zur Auslegung der Patentansprüche heranzuziehen.

### Bezugszeichenliste

- 2: Windenergieanlage
- 4: Turm
- 6: Fundament
- 8: Rotornabe
- 10: Rotorblätter
- 12: Verbindungsflansch
- 14: Verbindungselement
- 16: Oberseite
- 18: erster Lastverteilungsring
- 18a ... 18h: erste Segmente
- 20: zweiter Lastverteilungsring
- 20a ... 20h: zweite Segmente
- 22: Ausgleichsmasse
- 24: Durchgangsöffnungen
- 26: Mutter
- 41: unteres Turmsegment
- 42: mittleres Turmsegment
- 43: oberes Turmsegment

- R: Umfangsrichtung
- T: Radialrichtung
- M: Mittelpunkt
- B1: erste Breite
- B2: zweite Breite
- Bx: Breite des Verbindungsflanschs

## Patentansprüche

1. Windenergieanlage (2) mit einem Turm (4) und einem Fundament (6), wobei der Turm (4) einen unteren Verbindungsflansch (12) mit einer Anzahl von Öffnungen aufweist, und wobei das Fundament (6) eine Anzahl von Verbindungselementen (14) aufweist, die aus einer Oberseite (16) des Fundaments (6) herausragen und im montierten Zustand des Turms (4) zumindest einige der Öffnungen des Verbindungsflansches (12) durchsetzen, umfassend ein Lastverteilungssystem mit einem ersten Lastverteilungsring (18) und mit einem zweiten Lastverteilungsring (20), wobei die Verbindungselemente (14) die Lastverteilungsringe (18, 20) im montierten Zustand des Turms (4) durchsetzen, der erste Lastverteilungsring (18) zumindest mittelbar auf der Oberseite (16) des Fundaments (6) aufgesetzt ist, der zweite Lastverteilungsring (20) unmittelbar benachbart zu dem Verbindungsflansch (12) des Turms (4) und die beiden Lastverteilungsringe (18, 20) unmittelbar benachbart zueinander angeordnet sind, und wobei der erste Lastverteilungsring (18) und der zweite Lastverteilungsring (20) jeweils in Umfangsrichtung (R) segmentiert sind, also aus mehreren einzelnen Segmenten (18a ... 18h, 20a ... 20h) aufgebaut sind, wobei der untere Verbindungsflansch (12) ein T-Flansch ist und/oder erste Segmente (18a ... 18h) des ersten Lastverteilungsrings (18) und zweite Segmente (20a ... 20h) des zweiten Lastverteilungsrings (20) in Umfangsrichtung (R) gegeneinander versetzt angeordnet sind, so dass erste Stöße (18x) zwischen den ersten Segmenten (18a ... 18h) des ersten Lastverteilungsrings (18) und zweite Stöße (20x) zwischen den zweiten Segmenten (20a ... 20h) des zweiten Lastverteilungsrings (20) entlang des Umfangs der Lastverteilungsringe (18, 20) gegeneinander versetzt sind.

2. Windenergieanlage (2) nach Anspruch1, **dadurch gekennzeichnet, dass** das Fundament (6) einen Fundamentkorb mit Ankerstangen aufweist, wobei Freienden der Ankerstangen als Verbindungselemente (14) aus der Oberseite (16) des Fundaments (6) herausragen.

3. Windenergieanlage (2) nach einem der vorhergehenden Ansprüche, **dadurch gekennzeichnet, dass** eine erste Breite (B1) des ersten Lastverteilungsrings (18) größer oder gleich einer zweiten Breite (B2) des zweiten Lastverteilungsrings (20) ist, wobei die erste und die zweite Breite (B1, B2) in einer Radialrichtung des jeweiligen Lastverteilungsrings (18, 20) bestimmbar ist.

4. Windenergieanlage (2) nach einem der vorhergehenden Ansprüche, **dadurch gekennzeichnet, dass** zwischen dem ersten Lastverteilungsring (18) und der Oberseite (16) des Fundaments (6) eine Ausgleichsmasse (22) zum Ausnivellieren des Turms (4) der Windenergieanlage (2) vorhanden ist.

5. Lastverteilungssystem einer Windenergieanlage (2), die einen Turm (4) und ein Fundament (6) aufweist, wobei der Turm (4) einen unteren Verbindungsflansch (12) mit einer Anzahl von Öffnungen aufweist, und wobei das Fundament (6) eine Anzahl von Verbindungselementen (14) aufweist, die aus einer Oberseite (16) des Fundaments (6) herausragen und im montierten Zustand des Turms (4) zumindest einige der Öffnungen des Verbindungsflansches (12) durchsetzen, wobei das Lastverteilungssystem einen ersten Lastverteilungsring (18) und einen zweiten Lastverteilungsring (20) aufweist, wobei die Lastverteilungsringe (18, 20) dazu eingerichtet sind, im montierten Zustand des Turms (4) von den Verbindungselementen (14) durchsetzbar zu sein, wobei die Lastverteilungsringe (18, 20) ferner dazu eingerichtet sind, dass der erste Lastverteilungsring (18) zumindest mittelbar auf der Oberseite (16) des Fundaments (6) aufsetzbar ist, der zweite Lastverteilungsring (20) unmittelbar benachbart zu dem Verbindungsflansch (12) anordnenbar ist und die beiden Lastverteilungsringe (18, 20) unmittelbar benachbart zueinander anordnenbar sind, wobei der erste Lastverteilungsring (18) und der zweite Lastverteilungsring (20) jeweils in Umfangsrichtung (R) segmentiert sind, also aus mehreren einzelnen Segmenten (18a ... 18h, 20a ... 20h) aufgebaut sind, und wobei der untere Verbindungsflansch (12) ein T-Flansch ist und/oder erste Segmente (18a ... 18h) des ersten Lastverteilungsrings (18) und zweite Segmente (20a ... 20h) des zweiten Lastverteilungsrings (20) in Umfangsrichtung (R) gegeneinander versetzt anordnenbar sind, so dass erste Stöße (18x) zwischen den ersten Segmenten (18a ... 18h) des ersten Lastverteilungsrings (18) und zweite Stöße (20x) zwischen den zweiten Segmenten (20a ... 20h) des zweiten Lastverteilungsrings (20) entlang des Umfangs der Lastverteilungsringe (18, 20) gegeneinander versetzt sind .

6. Verfahren zum Errichten eines Turms (4) einer Windenergieanlage (2) auf einem Fundament (6), wobei der Turm (4) einen unteren Verbindungsflansch (12) mit einer Anzahl von Öffnungen aufweist, und wobei das Fundament (6) eine Anzahl von Verbindungselementen (14) aufweist, die aus einer Oberseite (16) des Fundaments (6) herausragen, wobei zum Montieren des Turms (4) die Verbindungselemente (14) durch zumindest einige der Öffnungen des Verbindungsflansches (12) hindurchgeführt werden, **gekennzeichnet durch** die folgenden Schritte:
- Bereitstellen eines Lastverteilungssystems, welches einen ersten Lastverteilungsring (18) und einen zweiten Lastverteilungsring (20) aufweist, wobei der erste Lastverteilungsring (18) und der zweite Lastverteilungsring (20) jeweils in Umfangsrichtung (R) segmentiert sind, also aus mehreren einzelnen Segmenten (18a ... 18h, 20a ... 20h) aufgebaut sind,
- Anordnen des ersten Lastverteilungsrings (18) auf dem Fundament (6), wobei die Verbindungselemente (14) den ersten Lastverteilungsring (18) durchsetzen,
- Ausnivellieren des ersten Lastverteilungsrings (18) auf der Oberseite (16) des Fundaments (6),
- Anordnen des zweiten Lastverteilungsrings (20) unmittelbar benachbart zu dem Verbindungsflansch (12) des Turms (4) und
- Anordnen der beiden Lastverteilungsringe (18, 20) unmittelbar benachbart zueinander,
wobei der untere Verbindungsflansch (12) ein T-Flansch ist und/oder erste Segmente (18a ... 18h) des ersten Lastverteilungsrings (18) und zweite Segmente (20a ... 20h) des zweiten Lastverteilungsrings (20) in Umfangsrichtung (R) gegeneinander versetzt angeordnet werden, so dass erste Stöße (18x) zwischen den ersten Segmenten (18a ... 18h) des ersten Lastverteilungsrings (18) und zweite Stöße (20x) zwischen den zweiten Segmenten (20a ... 20h) des zweiten Lastverteilungsrings (20) entlang des Umfangs der Lastverteilungsringe (18, 20) gegeneinander versetzt angeordnet werden.

7. Verfahren nach Anspruch 6, **dadurch gekennzeichnet, dass** während des Ausnivellierens der erste Lastverteilungsring (18) auf der Oberseite (16) des Fundaments (6) ausgerichtet wird und dabei zumindest abschnittsweise ein Spalt zwischen einer Unterseite des ersten Lastverteilungsrings (18) und der Oberseite des Fundaments (6) entsteht und anschließend der entstandene Spalt zum zumindest überwiegenden Teil mit einer Ausgleichsmasse (22) gefüllt wird.

8. Verfahren nach Anspruch 7, **dadurch gekennzeichnet, dass** nach dem Füllen des entstandenen Spalts mit Ausgleichsmasse (22) und dem Aushärten der Ausgleichsmasse (22), eine akustisch gestützte Qualitätsprüfung der Verbindung zwischen dem ersten Lastverteilungsring (18) und der Ausgleichsmasse (22) vorgenommen wird.

9. Verfahren nach Anspruch 6, **dadurch gekennzeichnet, dass** während des Ausnivellierens ein ausgerichteter Fundamentabschnitt aus einer Ausgleichsmasse (22) bereitgestellt wird und der erste Lastverteilungsring (18) auf diesen ausgerichteten Fundamentabschnitt aufgesetzt wird.

10. Verfahren nach einem der Ansprüche 6 bis 9, **dadurch gekennzeichnet, dass** der erste Lastverteilungsring (18) Durchgangsöffnungen (24) aufweist, die in einem Lochbild angeordnet sind, wobei das Fundament (6) einen Fundamentkorb mit Ankerstangen aufweist und Freienden der Ankerstangen als Verbindungselemente (14) vorgesehen sind, und wobei zum Herstellen des Fundaments (6) mit einer vorgegebenen Anordnung der Verbindungselemente (14) auf der Oberseite (16) des Fundaments (6), der erste Lastverteilungsring (18) auf die Ankerstangen aufgesetzt wird, und anschließend die der Fundamentkorb und insbesondere die Ankerstangen im Fundament (6) fixiert werden, wobei das erste Verbindungselement (14) als Schablone für den Ankerkorb wirkt.

## Claims

1. A wind energy installation (2) which comprises a tower (4) and a foundation (6), wherein the tower (4) comprises a lower connecting flange (12) with a number of openings, and wherein the foundation (6) comprises a number of connecting elements (14) which project from an upper side (16) of the foundation (6) and, in the assembled state of the tower (4), pass through at least some of the openings of the connecting flange (12), comprising a load distribution system with a first load distribution ring (18) and with a second load distribution ring (20), wherein the connecting elements (14) pass through the load distribution rings (18, 20) in the assembled state of the tower (4), wherein the first load distribution ring (18) is placed at least indirectly on the upper side (16) of the foundation (6), wherein the second load distribution ring (20) is arranged immediately adjacent to the connecting flange (12) of the tower (4) and the two load distribution rings (18, 20) are arranged immediately adjacent to one another, and wherein the first load distribution ring (18) and the second load distribution ring (20) are each segmented in the circumferential direction (R), i. e. are made up of a plurality of individual segments (18a .... 18h, 20a ... 20h), wherein the lower connecting flange (12) is a T-flange and / or first segments (18a ... 18h) of the first load distribution ring (18) and second segments (20a ... 20h) of the second load distribution ring (20) are arranged offset with respect to one another in the circumferential direction (R) in such a way that first joints (18x) between the first segments (18a ... 18h) of the first load distribution ring (18) and second joints (20x) between the second segments (20a ... 20h) of the second load distribution ring (20) are offset with respect to one another along the circumference of the load distribution rings (18, 20).

2. The wind energy installation (2) according to claim 1, **characterised in that** the foundation (6) comprises a foundation basket with anchor rods, wherein free ends of the anchor rods project as connecting elements (14) from the upper side (16) of the foundation (6).

3. The wind energy installation (2) according to any one of the preceding claims, **characterised in that** a first width (B1) of the first load distribution ring (18) is greater than, or equal to, a second width (B2) of the second load distribution ring (20), wherein the first and second widths (B1, B2) are determinable in a radial direction of the respective load distribution ring (18, 20).

4. The wind energy installation (2) according to any one of the preceding claims, **characterised in that** between the first load distribution ring (18) and the upper side (16) of the foundation (6) there is a levelling compound (22) for levelling out the tower (4) of the wind energy installation (2).

5. A load distribution system of a wind energy installation (2) which comprises a tower (4) and a foundation (6), wherein the tower (4) comprises a lower connecting flange (12) with a number of openings, and wherein the foundation (6) comprises a number of connecting elements (14) which project from an upper side (16) of the foundation (6) and which, in the assembled state of the tower (4), pass through at least some of the openings of the connecting flange (12), wherein the load distribution system comprises a first load distribution ring (18) and a second load distribution ring (20), wherein the load distribution rings (18, 20) are arranged to be such that, in the assembled state of the tower (4), the connecting elements (14) are able to pass through them, wherein the load distribution rings (18, 20) are further arranged to be such that the first load distribution ring (18) is able to be placed at least indirectly on the upper side (16) of the foundation (6), that the second load distribution ring (20) is able to be arranged immediately adjacent to the connecting flange (12) and that the two load distribution rings (18, 20) are able to be arranged immediately adjacent to one another, wherein the first load distribution ring (18) and the second load distribution ring (20) are each segmented in the circumferential direction (R), i. e. are made up of a plurality of individual segments (18a .... 18h, 20a ... 20h), and wherein the lower connecting flange (12) is a T-flange and / or first segments (18a ... 18h) of the first load distribution ring (18) and second segments (20a ... 20h) of the second load distribution ring (20) are able to be arranged offset with respect to one another in the circumferential direction (R) in such a way that first joints (18x) between the first segments (18a ... 18h) of the first load distribution ring (18) and second joints (20x) between the second segments (20a ... 20h) of the second load distribution ring (20) are offset with respect to one another along the circumference of the load distribution rings (18, 20).

6. A method of erecting a tower (4) of a wind energy installation (2) on a foundation (6), wherein the tower (4) comprises a lower connecting flange (12) with a number of openings, and wherein the foundation (6) comprises a number of connecting elements (14) which project from an upper side (16) of the foundation (6), wherein, for assembling the tower (4), the connecting elements (14) are passed through at least some of the openings of the connecting flange (12), **characterised by** the following steps:
- providing a load distribution system which comprises a first load distribution ring (18) and a second load distribution ring (20), wherein the first load distribution ring (18) and the second load distribution ring (20) are each segmented in the circumferential direction (R), i. e. are made up of a plurality of individual segments (18a .... 18h, 20a ... 20h),
- arranging the first load distribution ring (18) on the foundation (6), wherein the connecting elements (14) pass through the first load distribution ring (18),
- levelling out the first load distribution ring (18) on the upper side (16) of the foundation (6),
- arranging the second load distribution ring (20) immediately adjacent to the connecting flange (12) of the tower (4), and
- arranging the two load distribution rings (18, 20) immediately adjacent to one another,
wherein the lower connecting flange (12) is a T-flange and / or first segments (18a ... 18h) of the first load distribution ring (18) and second segments (20a ... 20h) of the second load distribution ring (20) are arranged offset with respect to one another in the circumferential direction (R) in such a way that first joints (18x) between the first segments (18a ... 18h) of the first load distribution ring (18) and second joints (20x) between the second segments (20a ... 20h) of the second load distribution ring (20) are arranged offset with respect to one another along the circumference of the load distribution rings (18, 20).

7. The method according to claim 6, **characterised in that**, during levelling, the first load distribution ring (18) is aligned on the upper side (16) of the foundation (6) and a gap is formed, at least in sections, between an underside of the first load distribution ring (18) and the upper side of the foundation (6), and subsequently the gap which has formed is at least predominantly filled with a levelling compound (22).

8. The method according to claim 7, **characterised in that**, after the filling of the resulting gap with the levelling compound (22) and the hardening of the levelling compound (22) has taken place, an acoustically supported quality check of the connection between the first load distribution ring (18) and the levelling compound (22) is carried out.

9. The method according to claim 6, **characterised in that**, while levelling takes place, an aligned foundation section is provided from a levelling compound (22) and the first load distribution ring (18) is placed on this aligned foundation section.

10. The method according to any one of the claims 6 to 9, **characterised in that** the first load distribution ring (18) comprises through holes (24) which are arranged in a hole pattern, wherein the foundation (6) comprises a foundation basket with anchor rods, and free ends of the anchor rods are provided as connecting elements (14), and wherein, for constructing the foundation (6) with a predetermined arrangement of the connecting elements (14) on the upper side (16) of the foundation (6), the first load distribution ring (18) is placed on the anchor rods, and subsequently the foundation basket and in particular the anchor rods are fixed in the foundation (6), wherein the first connecting element (14) acts as a template for the anchor basket.

## Revendications

1. Eolienne (2) avec une tour (4) et une fondation (6), dans laquelle la tour (4) présente une bride de liaison inférieure (12) avec un nombre donné d'ouvertures, et dans laquelle la fondation (6) présente un nombre donné d'éléments de liaison (14), qui dépassent d'un côté supérieur (16) de la fondation (6) et traversent, dans l'état monté de la tour (4), au moins certaines des ouvertures de la bride de liaison (12), comprenant un système de répartition de charges avec une première bague de répartition de charges (18) et avec une seconde bague de répartition de charges (20), dans laquelle les éléments de liaison (14) traversent les bagues de répartition de charges (18, 20) dans l'état monté de la tour (4), la première bague de répartition de charges (18) est placée au moins indirectement sur le côté supérieur (16) de la fondation (6), la seconde bague de répartition de charges (20) est disposée directement de manière adjacente par rapport à la bride de liaison (12) de la tour (4) et les deux bagues de répartition de charges (18, 20) sont disposées directement de manière adjacente l'une par rapport à l'autre, et dans laquelle la première bague de répartition de charges (18) et la seconde bague de répartition de charges (20) sont segmentées respectivement dans la direction périphérique (R), donc sont élaborées à partir de plusieurs segments (18a ... 18h, 20a ... 20h) individuels, dans laquelle la bride de liaison inférieure (12) est une bride en T et/ou des premiers segments (18a ... 18h) de la première bague de répartition de charges (18) et des seconds segments (20a ... 20h) de la seconde bague de répartition de charges (20) sont disposés de manière décalée les uns à l'encontre des autres dans la direction périphérique (R) de sorte que des premiers chocs (18x) entre les premiers segments (18a ... 18h) de la première bague de répartition de charges (18) et des seconds chocs (20x) entre les seconds segments (20a ... 20h) de la seconde bague de répartition de charges (20) sont décalés les uns à l'encontre des autres le long de la périphérie des bagues de répartition de charges (18, 20).

2. Eolienne (2) selon la revendication 1, **caractérisée en ce que** la fondation (6) présente une cage de fondation avec des tiges d'ancrage, dans laquelle des extrémités libres des tiges d'ancrage dépassent en tant qu'éléments de liaison (14) du côté supérieur (16) de la fondation (6) .

3. Eolienne (2) selon l'une quelconque des revendications précédentes, **caractérisée en ce qu'**une première largeur (B1) de la première bague de répartition de charges (18) est supérieure ou égale à une seconde largeur (B2) de la seconde bague de répartition de charges (20), dans laquelle la première et la seconde largeur (B1, B2) peuvent être définies dans une direction radiale de la bague de répartition de charges (18, 20) respective.

4. Eolienne (2) selon l'une quelconque des revendications précédentes, **caractérisée en ce qu'**une masse d'équilibrage (22) servant à niveler la tour (4) de l'éolienne (2) est présente entre la première bague de répartition de charges (18) et le côté supérieur (16) de la fondation (6) .

5. Système de répartition de charges d'une éolienne (2), qui présente une tour (4) et une fondation (6), dans lequel la tour (4) présente une bride de liaison inférieure (12) avec un nombre donné d'ouvertures, et dans lequel la fondation (6) présente un nombre donné d'éléments de liaison (14), qui dépassent d'un côté supérieur (16) de la fondation (6) et traversent, dans l'état monté de la tour (4), au moins certaines des ouvertures de la bride de liaison (12), dans lequel le système de répartition de charges présente une première bague de répartition de charges (18) et une seconde bague de répartition de charges (20), dans lequel les bagues de répartition de charges (18, 20) sont mises au point pour être traversées, dans l'état monté de la tour (4), par les éléments de liaison (14), dans lequel les bagues de répartition de charges (18, 20) sont mises au point en outre pour que la première bague de répartition de charges (18) puisse être placée au moins indirectement sur le côté supérieur (16) de la fondation (6), la seconde bague de répartition de charges (20) puisse être disposée directement de manière adjacente par rapport à la bride de liaison (12) et les deux bagues de répartition de charges (18, 20) puissent être disposées directement de manière adjacente l'une par rapport à l'autre, dans lequel la première bague de répartition de charges (18) et la seconde bague de répartition de charges (20) sont segmentées respectivement dans la direction périphérique (R), donc sont élaborées à partir de plusieurs segments (18a ... 18h, 20a ... 20h) individuels, et dans lequel la bride de liaison inférieure (12) est une bride en T et/ou des premiers segments (18a ... 18h) de la première bague de répartition de charges (18) et des seconds segments (20a ... 20h) de la seconde bague de répartition de charges (20) peuvent être disposés de manière décalée les uns à l'encontre des autres dans la direction périphérique (R) de sorte que des premiers chocs (18x) entre les premiers segments (18a ... 18h) de la première bague de répartition de charges (18) et des seconds chocs (20x) entre les seconds segments (20a ... 20h) de la seconde bague de répartition de charges (20) sont décalés les uns à l'encontre des autres le long de la périphérie des bagues de répartition de charges (18, 20).

6. Procédé servant à construire une tour (4) d'une éolienne (2) sur une fondation (6), dans lequel la tour (4) présente une bride de liaison inférieure (12) avec un nombre donné d'ouvertures, et dans lequel la fondation (6) présente un nombre donné d'éléments de liaison (14), qui dépassent d'un côté supérieur (16) de la fondation (6), dans lequel, pour monter la tour (4), les éléments de liaison (14) sont guidés à travers au moins certaines des ouvertures de la bride de liaison (12), **caractérisé par** les étapes qui suivent :
- de fourniture d'un système de répartition de charges, lequel présente une première bague de répartition de charges (18) et une seconde bague de répartition de charges (20), dans lequel la première bague de répartition de charges (18) et la seconde bague de répartition de charges (20) sont segmentées respectivement dans la direction périphérique (R), donc sont élaborées à partir de plusieurs segments (18a ... 18h, 20a ... 20h) individuels ;
- d'agencement de la première bague de répartition de charges (18) sur la fondation (6), dans lequel les éléments de liaison (14) traversent la première bague de répartition de charges (18),
- de nivellement de la première bague de répartition de charges (18) sur le côté supérieur (16) de la fondation (6),
- d'agencement de la seconde bague de répartition de charges (20) directement de manière adjacente par rapport à la bride de liaison (12) de la tour (4), et
- d'agencement des deux bagues de répartition de charges (18, 20) directement de manière adjacente l'une par rapport à l'autre,
dans lequel la bride de liaison inférieure (12) est une bride en T et/ou des premiers segments (18a ... 18h) de la première bague de répartition de charges (18) et des seconds segments (20a ... 20h) de la seconde bague de répartition de charges (20) sont disposés de manière décalée les uns à l'encontre des autres dans la direction périphérique (R) de sorte que des premiers chocs (18x) entre les premiers segments (18a ... 18h) de la première bague de répartition de charges (18) et des seconds chocs (20x) entre les seconds segments (20a ... 20h) de la seconde bague de répartition de charges (20) sont décalés les uns à l'encontre des autres le long de la périphérie des bagues de répartition de charges (18, 20).

7. Procédé selon la revendication 6, **caractérisé en ce que** pendant le nivellement, la première bague de répartition de charges (18) est orientée sur le côté supérieur (16) de la fondation (6) et ce faisant au moins par endroits une fente entre le côté inférieur de la première bague de répartition de charges (18) et le côté supérieur de la fondation (6) se forme puis la fente formée est remplie au moins en majeure partie d'une masse d'équilibrage (22).

8. Procédé selon la revendication 7, **caractérisé en ce qu'**après le remplissage de la fente formée avec de la masse d'équilibrage (22) et le durcissement de la masse d'équilibrage (22), une vérification de qualité assistée de manière acoustique de la liaison entre la première bague de répartition de charges (18) et la masse d'équilibrage (22) est entreprise.

9. Procédé selon la revendication 6, **caractérisé en ce que** pendant le nivellement, une section de fondation orientée est fournie à partir d'une masse d'équilibrage (22) et la première bague de répartition de charges (18) est placée sur ladite section de fondation orientée.

10. Procédé selon l'une quelconque des revendications 6 à 9, **caractérisé en ce que** la première bague de répartition de charges (18) présente des ouvertures de passage (24), qui sont disposées selon un modèle de perforation, dans lequel la fondation (6) présente une cage de fondation avec des tiges d'ancrage et des extrémités libres des tiges d'ancrage sont prévues en tant qu'éléments de liaison (14), et dans lequel pour fabriquer la fondation (6) avec un agencement prédéfini des éléments de liaison (14) sur le côté supérieur (16) de la fondation (6), la première bague de répartition de charges (18) est placée sur les tiges d'ancrage, puis la cage de fondation et en particulier les tiges d'ancrage sont bloquées dans la fondation (6), dans lequel le premier élément de liaison (14) agit en tant que gabarit pour la cage d'ancrage.
